(19) Europäisches Patentamt
European Patent Office
Office européen des brevets

(11) EP 3 427 318 B1

(12) FASCICULE DE BREVET EUROPEEN

(45) Date de publication et mention de la délivrance du brevet:
**21.04.2021 Bulletin 2021/16**

(21) Numéro de dépôt: **17713734.6**

(22) Date de dépôt: **07.03.2017**

(51) Int Cl.:
***H01M 4/62*** (2006.01) ***H01M 4/134*** (2010.01)
***C08L 33/02*** (2006.01) ***H01M 10/0525*** (2010.01)
***H01M 4/1395*** (2010.01) ***H01M 4/38*** (2006.01)
***H01M 4/02*** (2006.01) ***C08L 33/08*** (2006.01)

(86) Numéro de dépôt international:
**PCT/FR2017/050507**

(87) Numéro de publication internationale:
**WO 2017/153678 (14.09.2017 Gazette 2017/37)**

# (54) ELECTRODE POUR BATTERIE LITHIUM-ION COMPRENANT UN LIANT FORME D'UN MELANGE DE DEUX POLYMERES, LE PREMIER POLYMERE ETANT UN PREMIER POLYACRYLATE OU UN DE SES DERIVES, LE DEUXIEME POLYMERE ETANT UN DEUXIEME POLYACRYLATE OU UNE CARBOXYMETHYLE CELLULOSE OU UN DE LEURS DERIVES, ENCRE POUR LA REALISATION D'UNE TELLE ELECTRODE.

ELEKTRODE FÜR LITHIUM-IONEN-BATTERIE MIT EINEM BINDER AUS EINER MISCHUNG AUS ZWEI POLYMEREN, WOBEI ES SICH BEIM ERSTEN POLYMER UM EIN ERSTES POLYACRYLAT ODER EINEM SEINER DERIVATE UND BEIM ZWEITEN POLYMER UM EIN ZWEITES POLYACRYLAT ODER EINE CARBOXYMETHYLCELLULOSE ODER EINEM IHRER DERIVATE HANDELT, SOWIE TINTE ZUR HERSTELLUNG SOLCH EINER ELEKTRODE

ELECTRODE FOR LITHIUM-ION BATTERY COMPRISING A BINDER FORMED FROM A BLEND OF TWO POLYMERS, THE FIRST POLYMER BEING A FIRST POLYACRYLATE OR ONE OF ITS DERIVATIVES, THE SECOND POLYMER BEING A SECOND POLYACRYLATE OR A CARBOXYMETHYL CELLULOSE OR ONE OF THEIR DERIVATIVES, INK FOR PRODUCING SUCH AN ELECTRODE.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2016 FR 1651917**

(43) Date de publication de la demande:
**16.01.2019 Bulletin 2019/03**

(73) Titulaires:
- **Commissariat à l'Énergie Atomique et aux Énergies Alternatives**
  **75015 Paris (FR)**
- **Umicore**
  **1000 Brussels (BE)**

(72) Inventeurs:
- **PORCHER, Willy**
  **38000 Grenoble (FR)**
- **BARBIER, Frédéric**
  **38400 Saint Martin d'Hères (FR)**
- **CHAZELLE, Sophie**
  **38210 Vourey (FR)**
- **MARIAGE, Nicolas**
  **38500 Voiron (FR)**
- **MERCHAT, Léo**
  **38000 Grenoble (FR)**

(74) Mandataire: **Brevalex**
**95, rue d'Amsterdam**
**75378 Paris Cedex 8 (FR)**

(56) Documents cités:
**GB-A- 2 470 190**
**GB-A- 2 502 345**
**US-A1- 2015 287 989**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### Domaine technique de l'invention

L'invention est relative à une électrode pour batterie lithium-ion comprenant un liant formé d'un mélange de deux polymères : le premier polymère est un premier polyacrylate ou un de ses dérivés, le deuxième polymère est un deuxième polyacrylate ou une carboxyméthyle cellulose ou un de leurs dérivés. L'invention est également relative à une encre pour la réalisation d'une telle électrode.

### État de la technique

Comme représenté à la figure 1, les accumulateurs au lithium sont classiquement constitués par une cellule électrochimique 1 disposée dans un boîtier 2. La cellule électrochimique 1 est formée par une électrode négative 3 et une électrode positive 4, séparées par un électrolyte 5. Chacune des électrodes positive et négative, respectivement 3 et 4, est en contact avec un collecteur de courant, 6a ou 6b, qui assure le transport des électrons vers un circuit électrique extérieur (non représenté). Selon le type d'accumulateur au lithium, l'électrolyte 5 peut se présenter sous une forme solide, liquide ou sous forme d'un gel.

Une batterie est formée de plusieurs accumulateurs.

Les électrodes 3 et 4 sont généralement réalisées par enduction d'une encre, comprenant le matériau électrochimiquement actif pulvérulent, un liant et un conducteur électronique, dispersés dans un solvant organique ou aqueux, sur le collecteur de courant 6a ou 6b.

L'étape d'enduction est classiquement suivie par le séchage de l'ensemble encre/collecteur de courant pour évacuer les traces de solvant contenu dans l'encre. L'électrode ainsi obtenue adhère au collecteur de courant.

Le conducteur électronique est utilisé pour améliorer la conductivité électronique des électrodes, 3 et 4.

Le liant permet de conférer à l'électrode la cohésion des différents composants des électrodes et sa tenue mécanique sur le collecteur de courant. Il confère également une certaine flexibilité à l'électrode pour sa mise en œuvre en cellule, notamment vis-à-vis de l'étape de bobinage, pour les éléments bobinés.

Le matériau électrochimiquement actif d'électrode négative est formé d'un métal ou d'un semi-métal capable de former un alliage avec le lithium. Il s'agit, en particulier, du silicium.

Ces types de matériau présentent une capacité spécifique théorique très élevée (de l'ordre de 3580mAh/g pour le silicium) comparée à celle du graphite (de l'ordre de 370mAh/g).

Cependant, ces matériaux présentent une forte expansion volumique lors de la lithiation. Cette expansion va être à l'origine de la dégradation de la cellule Li-ion à base de ce matériau à l'électrode négative : i) dégradation de l'intégrité de l'électrode qui conduit à une diminution de la capacité de l'électrode, ii) fracture de l'interface électrode-électrolyte (ou SEI pour « Solid Electrolyte Interface ») qui conduit à la formation continue de produit de dégradation, iii) addition de contraintes sur l'ensemble de la batterie et dégradations des autres composants.

Pour prévenir la dégradation de l'électrode et pour améliorer les performances électrochimiques de la batterie, de nombreuses études ont porté sur la nature du liant.

Les liants polymères pour électrode couramment utilisés à l'heure actuelle sont des liants polymères solubles :

- soit dans les solvants organiques tels que le polyvinylidène fluorure, noté PVDF,
- soit dans un solvant aqueux comme la carboxyméthyle cellulose, notée CMC, le caoutchouc nitrile (en anglais "nitrile butadiene rubber", noté NBR), le caoutchouc styrène-butadiène (en anglais "styrene butadiene rubber", noté SBR), ou encore l'acide polyacrylique (PAA) ou le polyacrylate suivant son degré de dissociation.

Les liants polymères solubles dans un solvant aqueux sont préférés car ils évitent l'utilisation de solvants organiques combustibles, volatiles, inflammables et toxiques, parfois classés Cancérigène Mutagène Reprotoxique (CMR) et dont l'usage nécessite la mise en place de conditions de manipulation particulières.

Un liant polymère se caractérise par sa longueur de chaîne, conventionnellement par le poids moléculaire en g/mol, Mw :

$$\bar{M}_w = \frac{\sum n_x M_x^2}{\sum n_x M_x}$$

Avec :

$n_x$, le nombre de macromolécules de degré de polymérisation x,
$M_x$ la masse de telles macromolécules.

La masse moléculaire, ou poids moléculaire, de polymère est définie comme étant une masse moyenne. Les masses moléculaires sont généralement distribuées selon une courbe de Gauss centrée sur la masse moléculaire le définissant.

Afin de conserver l'intégrité de l'électrode, un liant avec un module d'Young relativement élevé et une élasticité suffisante, comme le PAA ou la CMC, est préféré.

La CMC et le PAA sont tous les deux des polymères avec une chaîne carbonée. La chaîne carbonée comporte des groupements carboxyliques, sur chaque monomère, pour le PAA. Pour la chaîne carbonée rigide de la CMC, il y a une substitution partielle de certains groupements OH.

Les performances, en terme d'efficacité coulombique, notamment, sont meilleures avec le PAA (thèse de Etienne Radvanyi, soutenue en 2014, Université de Grenoble, « Compréhension des mécanismes de (dé)lithiation et de dégradation d'électrodes de silicium pour accumulateur Li-ion et étude de facteurs influents »). Le liant PAA combinerait avantageusement de bonnes interactions physico-chimiques avec la matière active et un module d'Young élevé, ainsi qu'une élasticité suffisante, permettant ainsi de conserver de manière optimale l'intégrité de l'électrode.

Il est connu d'intégrer le PAA comme liant dans des formulations pour électrode négative à base de silicium afin de remédier au problème d'expansion et de contraction du matériau électrochimiquement actif.

L'acide polyacrylique ou le polyacrylate, suivant son degré de dissociation, utilisé dans ces formulations, présente différents poids moléculaires : 250000 g/mol (thèse précitée), 750000 g/mol (J. Phys. Chem. C 2011, 115, 13487-13495), 1250000 g/mol (Energy Environ. Sci. 2012, 5, 9014-9020), entre 300000 g/mol et 3000000 g/mol (US 2007/0026313), entre 1000000 g/mol et 1250000 g/mol (US 2013/0236778), 2000 g/mol, 5000 g/mol ou 100000 g/mol (Appl. Mater. Interfaces, 2010, 2, 11, 3004-3010).

Cependant, même si l'utilisation du PAA permet, à la fois, de réduire la formation de l'interface électrode-électrolyte et de la stabiliser, il apparaît que la réalisation d'électrodes au moyen des encres précitées est difficile à mettre en œuvre. Les encres d'électrodes élaborées à partir de ces grades de PAA ne permettent pas, dans certains cas, d'intégrer des proportions importantes de PAA, typiquement plus de 2% en masse, ou dans d'autres cas, de conférer à l'encre d'électrode des propriétés rhéologiques adaptées à la technique d'enduction classiquement employée pour la réalisation des électrodes.

Il est connu du document US 2015/0287989 de réaliser une électrode négative dans laquelle des particules de silicium recouvertes de carbone et de carbonate de lithium sont associées à un liant. Le liant est un mélange de caoutchouc Styrène Butadiène SBR, de carboxyméthyle cellulose et éventuellement d'acide polyacrylique. En ajoutant de la carboxyméthyle cellulose et/un acide polyacrylique au liant principal en caoutchouc Styrène Butadiène SBR, il est possible de réduire l'effet de l'alcalinisation de la dispersion sur la réduction de la force pelage de l'électrode.

Le document GB 2502345 propose d'utiliser des particules composites dans une batterie lithium-ion. Les particules sont recouvertes individuellement par un premier polymère non soluble dans le N-méthyle pyrrolidone avant d'être associées à un liant soluble dans le N-méthyle pyrrolidone pour former un matériau composite. Le matériau polymère peut être un acide polyacrilyque ou une carboxyméthyle cellulose.

## Objet de l'invention

L'invention a pour but de remédier aux inconvénients de l'art antérieur et, en particulier, de proposer une électrode mécaniquement stable, suffisamment souple pour être assemblée, et présentant des propriétés électrochimiques améliorées ainsi qu'une encre, facile à déposer, et permettant d'obtenir, après séchage, une telle électrode.

Cet objet est atteint par une électrode pour accumulateur au lithium, ou pour batterie au lithium, comprenant :

- un matériau actif d'électrode, à base de silicium,
- un agent conducteur,
- un liant comprenant un mélange de deux polymères :
  - le premier polymère ayant un premier poids moléculaire, le premier polymère étant un premier polyacrylate ou un de ses dérivés,
  - le deuxième polymère ayant un deuxième poids moléculaire, le deuxième polymère étant un deuxième polyacrylate ou une carboxyméthyle cellulose, ou un de leurs dérivés respectifs.

L'électrode est remarquable en ce que le premier poids moléculaire est inférieur ou égal à 400,000g/mol et supérieur ou égal à 150,000g/mol et en ce que le deuxième poids moléculaire est supérieur ou égal à 650,000g/mol et inférieur ou égal à 4,000,000g/mol, et, de préférence, le second poids moléculaire est supérieur ou égal à 650,000g/mol

et inférieur ou égal à 1,500,000g/mol.

Cet objet est également atteint par une encre pour la réalisation d'une électrode de batterie lithium-ion comprenant :

- un matériau actif d'électrode, à base de silicium,
- un solvant,
- un agent conducteur,
- un liant comprenant un mélange de deux polymères :

    ◦ le premier polymère ayant un premier poids moléculaire, le premier polymère étant un premier polyacrylate ou un de ses dérivés,
    ◦ le deuxième polymère ayant un deuxième poids moléculaire, le deuxième polymère étant un deuxième polyacrylate ou une carboxyméthyle cellulose, ou un de leurs dérivés respectifs.

L'encre est remarquable en ce que le premier poids moléculaire est inférieur ou égal à 400,000g/mol et supérieur ou égal à 150,000g/mol et en ce que le deuxième poids moléculaire est supérieur ou égal à 650,000g/mol et inférieur ou égal à 4,000,000g/mol, et, de préférence, le second poids moléculaire est supérieur ou égal à 650,000g/mol et inférieur ou égal à 1,500,000g/mol.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 représente, de manière schématique et en coupe, un accumulateur au lithium selon l'art antérieur,
- les figures 2, 3a, 4a sont des graphiques représentant la viscosité ($\eta$) de différentes encres et solutions en fonction du gradient de cisaillement ($\gamma$),
- les figures 3b et 4b sont des graphiques représentant le module visqueux (G") et le module élastique (G') de différentes encres en fonction de la fréquence (f),
- la figure 5 représente l'efficacité coulombique (CE) en fonction du nombre de cycles pour une électrode comprenant un liant formé d'un premier polyacrylate d'un poids moléculaire de 250,000g/mol et d'un deuxième polyacrylate d'un poids moléculaire de 1,250,000g/mol avec un degré de dissociation de 100% (électrode G) en pile bouton.

## Description d'un mode de réalisation préférentiel de l'invention

L'encre pour la réalisation d'une électrode de batterie lithium-ion comprend :

- un matériau actif d'électrode,
- un solvant, avantageusement de l'eau,
- un agent conducteur électronique,
- un liant comprenant un mélange de deux polymères :

    o le premier polymère ayant un premier poids moléculaire, le premier polymère étant un premier polyacrylate ou un de ses dérivés,
    o le deuxième polymère ayant un deuxième poids moléculaire, le deuxième polymère étant un deuxième polyacrylate ou une carboxyméthyle cellulose, ou un de leurs dérivés respectifs.

- éventuellement, en outre, un additif.

Selon un mode de réalisation préférentiel, l'encre est constituée :

- du matériau actif d'électrode, à base de silicium,
- du solvant,
- de l'agent conducteur électronique,
- du liant comprenant le mélange des deux polymères.

Le matériau actif d'électrode est un matériau d'électrode négative utilisé dans les accumulateurs au lithium.

Le matériau d'électrode négative comprend au moins un métal ou un semi-métal M susceptible de former un alliage avec le lithium de type $Li_xM$ avec x compris entre 0 et 5. Le métal ou le semi-métal est, avantageusement, du silicium, de l'aluminium, de l'étain ou bien du germanium. Préférentiellement, le matériau actif d'électrode est à base de silicium.

Pour conserver l'intégrité du matériau au cours du cyclage, le silicium est, avantageusement, sous forme de nanoparticules.

Le silicium est sous forme nanométrique, de préférence, sous forme de nanoparticules pour limiter les phénomènes de pulvérisation. Avantageusement, 90% de sa distribution de taille est inférieure à 300nm, et préférentiellement 50% de sa distribution de taille est inférieure à 150nm. La distribution de taille est une distribution en volume.

Toujours pour conserver son intégrité, le silicium peut également être intégré sous forme de nanoparticules dans une matrice micrométrique. Par matrice micrométrique, on entend une matrice de taille micrométrique, c'est-à-dire une matrice ayant une taille allant de 0,1$\mu$m à 50$\mu$m, et avantageusement, une taille allant de 2$\mu$m à 10$\mu$m.

La matrice micrométrique peut être une matrice de carbone ou une matrice métallique (Fe, Al, Co, Ni, Mn, Sn, Ge, etc).

La matrice peut être majoritaire en poids par rapport au silicium. Avantageusement, cette matrice représente au moins 50% de la masse. Très avantageusement, cette matrice représente au moins 80% de la masse. L'intégration de particules de silicium nanométriques dans une matrice micrométrique conduit à la formation d'un matériau composite, permettant de diminuer l'impact des expansions volumiques répétées.

Le silicium est susceptible de former un alliage avec le lithium de type $Li_xSi$, avec x compris entre 0 et 3,75.

Le matériau actif peut également être un mélange d'un composé à base de silicium et d'un autre composé, comme du graphite par exemple.

Le pourcentage en poids de matériau électrochimiquement actif est supérieur ou égal à 85% et, de préférence, supérieur ou égal à 90% au poids de l'électrode sèche.

L'encre peut, dans certains modes de réalisation, comporter un additif, aussi appelée composant additionnel.

Il peut s'agir d'un polymère supplémentaire, comme de la carboxyméthyle cellulose, du latex pour améliorer la souplesse de l'électrode, ou encore d'un agent réticulant comme l'alcool polyvinylique (ou PVA pour « PolyVinyl Alcohol). Selon une autre alternative, cet autre composant peut être un polyacrylate (PAA) d'un autre poids moléculaire. L'encre comporte alors trois PAA de poids moléculaires différents.

Cet autre composant représente 5% massique ou moins de l'électrode, et de préférence, 3% ou moins.

Les différents pourcentages massiques exprimés, sauf indication contraire, sont calculés par rapport à la somme totale des poids des composés suivants : le matériau actif d'électrode, l'agent conducteur électronique, le liant et, éventuellement, l'additif.

Le solvant n'est pas pris en compte. Le solvant s'évaporant lors du procédé de réalisation de l'électrode, les pourcentages massiques relatifs à l'encre et à l'électrode sont ainsi identiques. Le poids des composés de l'encre est donc, ici, défini par rapport à l'électrode.

Plus précisément, par poids de l'électrode ou poids de l'électrode sèche, on entend le poids des différents composés une fois l'encre enduite et le solvant évaporé. On parle également d'extrait sec.

L'agent conducteur est, avantageusement, du carbone sous forme divisée, sous forme de particules sphériques, ou sous forme de fibres par exemple.

L'agent conducteur peut contenir un ou plusieurs matériaux conducteurs électroniques. Le conducteur électronique est, de préférence, choisi parmi le noir de carbone, les fibres de carbone, le carbone ultra-divisé et un mélange de ceux-ci. Par carbone ultra-divisé, on entend du carbone présentant une très grande surface spécifique.

Le liant représente de 2% à 15% du poids de l'extrait sec, ou du poids de l'électrode sèche, et de préférence, de 4% à 10% du poids de l'extrait sec.

L'encre est remarquable en ce que le liant comprend un mélange de deux polymères :

- o le premier polymère ayant un premier poids moléculaire, le premier polymère étant un premier polyacrylate ou un de ses dérivés,
- o le deuxième polymère ayant un deuxième poids moléculaire, le deuxième polymère étant un deuxième polyacrylate ou une carboxyméthyle cellulose, ou un de leurs dérivés respectifs.

Les poids moléculaires des premier et deuxième polymères sont différents. Le second poids moléculaire est supérieur au premier poids moléculaire. Avantageusement, le premier poids moléculaire est d'au plus 67% massique par rapport au deuxième poids moléculaire, voire d'au plus 50% par rapport au deuxième poids moléculaire.

Par dérivé du polacrylate, on entend un polymère ou co-polymère à base d'au moins 50% de la fonction acrylate :

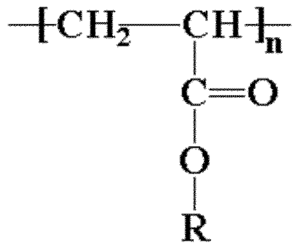

avec R correspondant à un cation comme du lithium, du sodium, de l'ammonium, ou du potassium dans sa forme dissociée (polyacrylate).

R correspond à H dans sa forme non dissociée (acide polyacrylique).

Les groupements carboxyliques du PAA sont dissociés, à partir d'une forme non dissociée, par ajout de LiOH, NaOH, $NH_4OH$ ou KOH.

Le degré de dissociation est le rapport entre le nombre de groupements carboxylates et le nombre de groupements carboxyliques et carboxylates.

Le degré de dissociation des polymères va, avantageusement, de 35% à 100%. Pour atteindre ce degré de dissociation du LiOH, du NaOH, du $NH_4OH$ ou du KOH est ajouté dans une solution de PAA de telle manière à neutraliser, suivant le degré visé, entre 35 et 100% des groupements carboxyliques.

Le pH du solvant peut être modifié pour contrôler le degré de dissociation du liant. Le pH peut être un indicateur pour estimer le degré de dissociation du liant.

Les macromolécules de PAA adoptent alors une conformation en solution plus déroulée par rapport à de plus faibles degrés de dissociation. L'encre est alors plus visqueuse et elle présente aussi un comportement rhéo-fuidifiant plus marqué. Ceci est ensuite bénéfique aux performances électrochimiques.

Par dérivé de la CMC, on entend un polymère ou co-polymère à base d'au moins 50% du monomère suivant :

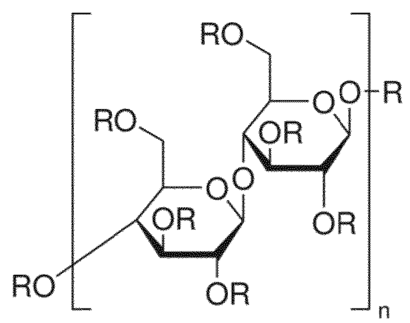

Avec R pouvant être un mélange de H, de $CH_2COOH$, $CH_2COOLi$, $CH_2COONa$, ou de OLi, ONa, ou OH.

L'alginate est, par exemple, un dérivé de la CMC.

Le degré de dissociation des polymères va de 35% à 100%.

Le liant est, avantageusement, constitué des deux polymères.

Selon un mode de réalisation, le premier polymère est un polyacrylate et le deuxième polymère est une carboxyméthyle cellulose.

Le poids moléculaire du polyacrylate est, avantageusement, supérieur ou égal à 150,000g/mol et inférieur ou égal à 400,000g/mol.

Le poids moléculaire de la CMC est, avantageusement, compris entre 650,000g/mol et 4,000,000g/mol, et encore plus avantageusement entre 650,000g/mol et 1,500,000g/mol.

Selon un autre mode de réalisation, le premier polymère et le deuxième polymère sont des polyacrylates ou un de leurs dérivés.

Encore plus préférentiellement, le premier polymère est un polyacrylate $PAA_1$ et le deuxième polymère est un polyacrylate $PAA_2$.

Ces encres présentent des propriétés rhéologiques améliorées par rapport aux encres ne contenant qu'un seul polyacrylate, elles sont donc plus faciles à déposer par enduction. En même temps, elles autorisent une incorporation de PAA plus importante dans l'encre, conduisant à des électrodes présentant de meilleures propriétés électrochimiques.

Préférentiellement, le premier poids moléculaire de $PAA_1$ est inférieur ou égal à 400,000g/mol. Il est, préférentiellement, supérieur ou égal à 150,000g/mol. Ces PAA peuvent être ajoutés en grande quantité dans l'encre car leur ajout n'augmente pas significativement la viscosité.

Préférentiellement, le second poids moléculaire de $PAA_2$ est supérieur ou égal à 650,000g/mol. Il est, préférentiellement, inférieur ou égal à 4,000,000g/mol. Encore plus préférentiellement, le second poids moléculaire de $PAA_2$ est supérieur ou égal à 650,000g/mol et inférieur ou égal à 1,500,000g/mol.

Pour des masses moléculaires supérieures, il est nécessaire d'intégrer plus d'eau dans l'encre pour avoir une viscosité adaptée. Les contraintes au séchage sont alors plus importantes, ce qui diminue la qualité de l'électrode. Avantageusement, les PAA à poids moléculaire moyen supérieur à 650,000g.mol$^{-1}$ sont constitués par des chaînes de polymère suffisamment longues pour donner un caractère rhéo-fluidifiant à l'encre.

Préférentiellement, le premier polymère et de le deuxième polymère sont des polyacrylates, le premier poids moléculaire étant supérieur ou égal à 150,000g/mol, de préférence supérieur ou égal à 250,000g/mol, et inférieur ou égal à 400,000g/mol, le deuxième poids moléculaire étant supérieur ou égal à 1,000,000g/mol et inférieur ou égal à 1,500,000g/mol, et le degré de dissociation des polymères étant supérieur à 90%.

Le rapport massique $PAA_1/PAA_2$ est supérieur ou égal à 1, c'est-à-dire que le mélange des PAA est effectué avec au plus 50% du PAA de poids moléculaire le plus haut. Le PAA de poids moléculaire le plus bas est majoritaire, ce qui conduit à une encre plus facile à déposer car moins visqueuse que dans le cas où le PAA de poids moléculaire le plus haut est majoritaire.

Si le $PAA_1$ est employé seul, l'encre est trop visqueuse et si le $PAA_2$ est employé seul, l'encre n'est pas assez rhéo-fluidifiante. Un mélange de PAA est nécessaire pour atteindre de telles gammes et pouvoir réaliser une électrode.

Les encres, élaborées avec de tels mélanges de PAA, présentent une viscosité de 0,5Pa.s à 5Pa.s pour un cisaillement de 100s$^{-1}$. Elles présentent un seuil d'écoulement de quelques Pa.

La viscosité de ces encres, pour un cisaillement de 0,1s$^{-1}$, est supérieure à 10 fois la viscosité de l'encre pour un cisaillement de 100s$^{-1}$, c'est-à-dire que l'encre aura une viscosité supérieure à 5Pa.s à 0,1s$^{-1}$.

De telles encres présentent un comportement de type rhéo-fluidifiant, avec une viscosité infinie au repos, c'est-à-dire avec une viscosité telle que le mouvement des particules de matériau actif est bloqué au repos. Ces encres sont, particulièrement, adaptées pour la réalisation d'une électrode par enduction.

Pour une encre comportant uniquement un PAA d'un poids moléculaire supérieur à 650,000g/mol, et un degré de dissociation compris entre 35 et 100%, l'encre présentera de bonnes propriétés rhéologiques.

Cependant, le PAA ne pourra pas être intégré dans des proportions importantes pour limiter les contraintes lors du séchage et donc garantir de bonnes propriétés mécaniques à une électrode ayant un grammage d'au moins 2,5 mg/cm$^2$ de matière active, c'est-à-dire au moins 2,5mg/cm$^2$ de matériau actif d'électrode. De plus, il sera difficile de garantir un extrait sec élevé à l'encre.

Les performances de cette électrode seront médiocres.

A l'inverse, dans le cas d'une encre comportant uniquement du PAA avec un poids moléculaire inférieur à 400,000g/mol, et un degré de dissociation compris entre 35 et 100%, le PAA pourra être intégré dans des proportions importantes, de l'ordre de 2 à 15%, mais le PAA ne confèrera pas de bonnes propriétés rhéologiques à l'encre, rendant son enduction médiocre et inhomogène.

Le caractère rhéo-fluidifiant du PAA peut être apprécié à partir de solution contenant uniquement un PAA. Des solutions ayant différentes concentrations de PAA et présentant un degré de dissociation de 100% ont été élaborées et leurs viscosités mesurées dans les conditions décrites précédemment.

Le PAA seul doit avoir une viscosité comprise entre 0,5 et 2 Pa.s à 100s$^{-1}$ pour pouvoir aboutir à une viscosité de l'encre finale comprise entre 0,5 et 5 Pa.s. Il doit également présenter un comportement rhéo-fluidifiant avec une viscosité à 0,1s$^{-1}$ dix fois plus importante que celle à 100s$^{-1}$. Les mêmes propriétés sont souhaitées pour l'encre. Les courbes obtenues sont représentées sur la figure 2.

Différentes solutions ont été étudiées (figure 2). Leurs propriétés rhéologiques sont répertoriées dans le tableau suivant :

| | solution | | Propriétés rhéologiques | | Bilan du Mw |
|---|---|---|---|---|---|
| Essai | Mw (kg/mol) | %m | Viscosité à 100s$^{-1}$ | Pente | $PAA_1$ ou $PAA_2$ |
| S1 | 100 | 12 | - | - | $PAA_1$ |
| S2 | 250 | 12 | - | - | $PAA_1$ |
| S3 | 345 | 12 | - | - | $PAA_1$ |
| S4 | 450 | 3 | + | - | X |
| S5 | 450 | 8 | + | - | |
| S6 | 450 | 12 | - | - | |
| S7 | 1250 | 1 | + | + | $PAA_2$ |

(suite)

| | solution | | Propriétés rhéologiques | | Bilan du Mw |
|---|---|---|---|---|---|
| Essai | Mw (kg/mol) | %m | Viscosité à $100s^{-1}$ | Pente | $PAA_1$ ou $PAA_2$ |
| S8 | 1250 | 3 | + | + | $PAA_2$ |
| S9 | 3000 | 1 | - | + | $PAA_2$ |

Sauf indication contraire, toutes les mesures de viscosité des encres ont été réalisées avec un rhéomètre, ici un équipement Bohlin® CVO®, avec un mobile conique tronqué de 50mm de diamètre et d'un angle de 4°, et d'un plan peltier régulé à 20°C. Un pré-cisaillement à $100s^{-1}$ pendant 10s est appliqué avant toute mesure. Quatre ou cinq points sont mesurés par décade avec 10s de mesure par point, en commençant par les gradients les plus élevés.

Les solutions de PAA avec un poids moléculaire de 100,000 250,000 ou 345,000g/mol ont une viscosité faible à $100s^{-1}$, même pour des concentrations de 12%. Elles ne comportent pas de caractère rhéo-fluidifiant. Ces poids moléculaires correspondent à la définition de $PAA_1$, soit une masse moléculaire permettant d'atteindre un pourcentage élevé de liant dans l'électrode sans apporter trop de viscosité à l'encre d'électrode.

Les solutions de PAA avec un poids moléculaire de 450,000g/mol ont une viscosité à $100s^{-1}$ correspondant à celle recherchée, mais pas un caractère rhéo-fluidifiant suffisant, même pour une concentration importante. Ce poids moléculaire ne correspond à aucune des 2 définitions de PAA.

Les solutions de PAA avec un poids moléculaire de 1,250,000 ou 3,000,000g/mol ont une viscosité adaptée à $100s^{-1}$, à condition que leur teneur soit faible. Elles comportent également un caractère rhéo-fluidifiant compatible avec celui recherché. Ces poids moléculaires correspondent à la définition de $PAA_2$, soit une masse moléculaire permettant de conférer à l'encre d'électrode de bonnes propriétés rhéologiques, mais ne permettant pas d'atteindre une proportion importante de PAA dans l'encre.

Deux encres comportant uniquement du PAA avec un poids moléculaire inférieur à 400,000g/mol ont été élaborées. Elles ont servies pour réaliser des électrodes avec un grammage de l'ordre de 5 mg de composite par $cm^2$ d'électrode à enduire. Les encres sont les suivantes :

- Encre A : électrode composée de 90% de composite de carbone et de silicium ayant une capacité spécifique de 600mAh/g (ce matériau composite est appelé par la suite composite or SiC), 2% de fibres de carbone, 3% de carbone ultra-divisé, 5% de PAA de poids moléculaire 250,000g/mol avec un degré de dissociation de 33%,
- Encre B : électrode composée de 90% de composite, 2% de fibres de carbone, 3% de carbone ultra-divisé, 5% de PAA de poids moléculaire 250,000g/mol avec un degré de dissociation de 100%.

Du LiOH est employé pour dissocier le PAA en solution avant son incorporation dans l'encre.

Elles sont comparées à trois électrodes identiques mais où le liant est :

- un PAA avec un poids moléculaire de 450,000 g/mol
- de la CMC à poids moléculaire de 250,000g/mol
- un mélange de PAA et de CMC avec un poids moléculaire de 250,000g/mol pour les 2.

Ces 3 encres sont les suivantes :

- Encre C : électrode composée de 90% de composite, 2% de fibres de carbone, 3% de carbone ultra-divisé, 5% de PAA 450,000g/mol avec un degré de dissociation de 33%,
- Encre CMC : électrode composée de 90% de composite, 2% de fibres de carbone, 3% de carbone ultra-divisé, 5% de CMC 250,000g/mol avec un degré de dissociation de 100% (la CMC employée est dissociée avec des groupements carboxylates de sodium COONa),
- Encre CMC/PAA : électrode composée de 90% de composite, 2% de fibres de carbone, 3% de carbone ultra-divisé, 2,5% de CMC 250,000g/mol et 2,5% de PAA 250,000g/mol avec un degré de dissociation de 50% (la CMC et le PAA sont dissociés avec du NaOH).

Les propriétés rhéologiques des cinq encres ont été mesurées, en viscosité, suivant le protocole décrit précédemment, et en mode oscillation, à 25°C et avec la même géométrie, mais pour une déformation de 1% entre 0,1 et 10 Hz. Quatorze points sont mesurés par décade, avec de 6 à 45s de mesure par point, sans pré-cisaillement, mais avec un repos de 10min.

La figure 3a représente la viscosité de ces encres en fonction du cisaillement.
La figure 3b représente les modules visqueux et élastiques obtenus en mode oscillation, sans déformation importante de l'encre, dans son domaine linéaire, ce qui donne accès aux propriétés au repos de l'encre.

Les courbes de viscosité (figure 3a) montrent que les encres A et C avec des PAA de 250,000g/mol et 450,000g/mol, et un degré de dissociation de 33% ne présente pas de caractère rhéo-fluidifiant.
Ce type de comportement rhéo-fluidifiant est atteint pour des mélanges avec 5% de PAA à 250,000g/mol avec un degré de dissociation de 100% (encre B). Cependant, pour l'encre B, entre 0,1 et 1 $s^{-1}$, la viscosité s'affaisse et ne tend plus vers une viscosité infinie.
Les encres CMC et CMC/PAA montrent ce comportement rhéo-fluidiant avec, cependant, un rapport inférieur à 10 entre les viscosités à 0,1 et $100s^{-1}$.
Le mode oscillation (figure 3b), avec le suivi des modules, confirme ces résultats. Quelle que ce soit la fréquence, on a toujours le module visqueux G" qui est supérieur au module élastique G' pour les encres CMC, CMC/PAA, A, B et C. L'encre ne bloque pas les mouvements des particules. L'encre n'est pas stable au repos et n'est donc pas adaptée au procédé classique de réalisation des électrodes pour batterie Li-ion, par enduction.
Des courbes de viscosité (figures 4a et 4b) ont également été réalisées avec les mêmes composants que précédemment mais avec des mélanges de PAA :

- Encre D : électrode composée de 90% de composite, 2% de fibres de carbone, 3% de carbone ultra-divisé, 1,5% de PAA 1,250,000g/mol, 3,5% de PAA 250,000g/mol avec un degré de dissociation de 100%
- Encre E : électrode composée de 90% de composite, 2% de fibres de carbone, 1,5% de PAA 1,250,000g/mol, 3,5% de PAA 250,000g/mol avec un degré de dissociation de 100%, 3% de latex
- Encre F : électrode composée de 90% de composite, 2% de fibres de carbone, 2,5% de PAA 1,250,000g/mol, 5,5% de PAA 100,000g/mol avec un degré de dissociation de 100%
- Encre G : électrode composée de 90% de composite, 2% de fibres de carbone, 2,5% de PAA 1,250,000g/mol, 5,5% de PAA 250,000g/mol avec un degré de dissociation de 100%
- Encre H : électrode composée de 90% de composite, 2% de fibres de carbone, 2,5% de PAA 1,250,000g/mol, 5,5% de PAA 345,000g/mol avec un degré de dissociation de 100%
- Encre I : électrode composée de 90% de composite, 2% de fibres de carbone, 0,5% de PAA 3,000,000g/mol, 7,5% de PAA 250,000g/mol avec un degré de dissociation de 100%

Les différentes encres évaluées à base de PAA sont résumées ci-dessous :

| Encre | % SiC composite | % CF | % CD | $PAA_1$ (% ; $M_w$ en g/mol) | $PAA_2$ (% ; $M_w$ en g/mol) | % Latex | DD |
|---|---|---|---|---|---|---|---|
| A | 90% | 2% | 3% | 5% 250,000 | | | 33% |
| B | 90% | 2% | 3% | 5% 250,000 | | | 100% |
| C | 90% | 2% | 3% | 5% 450,000 | | | 33% |
| D | 90% | 2% | 3% | 3,5% 250,000 | 1,5% 1,250,000 | | 100% |
| E | 90% | 2% | | 3,5% 250,000 | 2,5% 1,250,000 | 3% | 100% |
| F | 90% | 2% | | 5,5% 100,000 | 2,5% 1,250,000 | | 100% |
| G | 90% | 2% | | 5,5% 250,000 | 2,5% 1,250,000 | | 100% |
| H | 90% | 2% | | 5,5% 345,000 | 2,5% 1,250,000 | | 100% |
| I | 90% | 2% | | 7,5% 250,000 | 0,5% 3,000,000 | | 100% |

Les fibres de carbone sont notées CF, le carbone ultra-divisé est noté CD et le degré de dissociation est noté DD.
Pour les encres D, E, F, G, H, et I contenant en plus un PAA de haut poids moléculaire, avec un degré de dissociation de 100%, l'encre a un caractère rhéo-fluidifiant bien marqué ; un facteur d'au moins 50 est observable entre la viscosité à $100s^{-1}$ et celle à $0,1s^{-1}$.
Un autre composant, comme du latex, peut être ajouté sans altérer la stabilité de l'encre (encre E). Au niveau des modules, on observe toujours un module élastique supérieur au module visqueux pour les faibles fréquences, caractéristique d'une encre stable au repos.
Les évaluations rhéologiques des différentes encres sont regroupées dans le tableau ci-dessous :

| | $PAA_1$ | | $PAA_2$ *ou CMC* | | DD | Propriétés rhéologiques | | | Bilan |
|---|---|---|---|---|---|---|---|---|---|
| Encre | Mw (kg/mol) | % m | Mw (kg/mol) | %m | | Viscosité à $100s^{-1}$ | Pente | G'vs G" | Electrode |
| CMC | | | *250* | 5 | 100% | + | 0 | - | 0 |
| CMC/ PAA | 250 | 2,5 | *250* | 2,5 | 50% | + | 0 | - | 0 |
| A | 250 | 5 | | | 33% | + | - | - | - |
| B | 250 | 5 | | | 100% | + | + | - | - |
| C | 450 | 5 | | | 33% | + | - | - | - |
| D | 250 | 3,5 | 1250 | 1,5 | 100% | + | + | + | + |
| E | 250 | 3,5 | 1250 | 1,5 | 100% | + | + | + | + |
| F | 100 | 5,5 | 1250 | 2,5 | 100% | + | + | + | + |
| G | 250 | 5,5 | 1250 | 2,5 | 100% | + | + | + | + |
| H | 345 | 5,5 | 1250 | 2,5 | 100% | + | + | + | + |
| I | 250 | 7,5 | 3000 | 0,5 | 100% | + | + | + | + |

Les mélanges seuls de PAA faisant référence aux encres C et G ont été caractérisés par chromatographie par perméation de gel (GPC). Les mélanges ont été dilués à des valeurs de 0,1 mg/L pour pouvoir réaliser la mesure. Les résultats obtenus révèlent bien un mélange de poids moléculaires, avec une distribution de type bi-modal.

Pour intégrer une proportion importante de PAA et avoir à la fois une viscosité à $100s^{-1}$ comprise entre 0,5 et 2Pa.s et un caractère rhéo-fluidifiant, il est bien nécessaire d'avoir un mélange de PAA avec deux poids moléculaires distincts.

La formulation à base d'un mélange de deux polymères, le premier polymère étant un polyacrylate ou un de ses dérivés, le second polymère étant un polyacrylate, une carboxyméthylcellulose ou un de leurs dérivés respectifs, permet de réaliser des électrodes négatives présentant de bonnes propriétés électrochimiques et mécaniques, notamment en terme d'irréversible de premier cycle et de perte par cycle en cyclage.

Le procédé de réalisation d'une électrode pour accumulateur au lithium, ou batterie au lithium comprend les étapes successives suivantes :

- dépôt et séchage d'une encre, telle que précédemment décrite, sur un collecteur de courant, pour obtenir une électrode
- séchage des traces de solvant de l'électrode,
- calendrage de l'électrode.

Le procédé de séchage de l'électrode est, de préférence, réalisé à une température inférieure à 150°C et, encore plus préférentiellement, à une température inférieure à 130°C

Il est possible que les PAA réticulent entre eux et que l'électrode comprenne des « macropolymères » $PAA_1$-$PAA_1$ $PAA_2$-$PAA_2$ ou bien $PAA_1$-$PAA_2$, si l'électrode est séchée à une température supérieure à celle conventionnellement employée. Par exemple, il s'agit de températures supérieures à 150°C. Néanmoins, cette réticulation réduit l'élasticité du liant et n'est pas souhaitable pour les performances de l'électrode.

On se placera, avantageusement, à des températures inférieures aux températures indiquées ci-dessus de manière à empêcher la réticulation des polyacrylates.

Le liant est ainsi formé d'un mélange constitué du premier polyacrylate $PAA_1$ et du second polyacrylate $PAA_2$, il n'y a pas de réticulation.

L'encre est initialement obtenue en mélangeant dans de l'eau distillée, les différents composés : le matériau électrochimiquement actif, le solvant, le liant, l'agent conducteur électronique, et éventuellement l'additif.

En outre, une base pour dissocier le polymère peut également être ajoutée à l'encre.

L'encre peut également comporter un autre composant tel qu'un polymère.

L'encre est, ensuite, déposée sous forme d'une couche d'épaisseur variable sur une feuille généralement métallique constituant un collecteur de courant, pour former un ensemble encre/collecteur.

Le collecteur de courant est, de préférence, en cuivre. Il s'agit, par exemple, d'une feuille de cuivre.

Le dépôt de l'encre est réalisé, de préférence, par un procédé d'enduction classique, par exemple avec un

système de transfert à épaisseur contrôlée ou par un système d'enduction par filière en forme de fente.

L'électrode présente un grammage d'au moins 2,5mg/$cm^2$ de matière active déposée.

Avantageusement, le grammage est d'au moins 2,5 mg/$cm^2$ et est limité à 20 mg/$cm^2$. Préférentiellement, l'électrode a un grammage allant de 2,5mg/$cm^2$ à 10mg/$cm^2$ de matière active déposée et une densité d'au moins 1,4. L'électrode obtenue est ainsi compacte et dense.

Encore plus avantageusement, le grammage est compris entre 4 et 10 mg/$cm^2$. La qualité de l'encre obtenue permet de réaliser une enduction à une vitesse d'enduction élevée, de plusieurs m.$min^{-1}$, adaptée à une application industrielle. L'ensemble encre/collecteur est ensuite séché selon tout procédé connu, pour évaporer le solvant et obtenir une électrode supportée sur le collecteur de courant.

Les électrodes obtenues, avec un grammage d'environ 5mg/$cm^2$ de matière active, à partir d'une telle encre présentent de bonnes propriétés mécaniques, notamment en termes de souplesse et d'adhésion, même sans latex.

Ces électrodes sont facilement intégrées dans des cellules Li-ion, généralement par des procédés de bobinage ou d'empilement.

L'électrode est ensuite séchée selon tout procédé connu, pour évaporer les traces de solvant.

L'électrode ainsi formée peut, ensuite, être comprimée ou calandrée afin d'améliorer la densité d'énergie de l'électrode et d'augmenter la conductivité électronique de l'électrode, typiquement pour atteindre une densité d'au moins 1,4. La compression ou le calandrage a pour effet de rapprocher les particules de matériau électrochimiquement actif entre-elles, densifiant la couche et améliorant ainsi la percolation électrique entre les particules du matériau électrochimiquement actif de l'électrode.

L'électrode pour accumulateur au lithium, obtenue par le procédé, comprend :

- un matériau actif d'électrode, préférentiellement à base de silicium,
- un agent conducteur,
- un liant.

Le silicium est sous la forme de nanoparticules. Le silicium peut être inséré dans une matrice micrométrique. Le silicium est susceptible de former un alliage avec le lithium de type LixSi, avec x compris entre 0 et 3,75.

Avantageusement, 90% du silicium sous forme de nanoparticules présente une distribution de taille inférieure à 300nm, et, de préférence, 50% du silicium sous forme de nanoparticules présente une distribution de taille inférieure à 150nm.

Le liant comprend un mélange de deux polymères :

o le premier polymère ayant un premier poids moléculaire, le premier polymère étant un premier polyacrylate ou un de ses dérivés,

o le deuxième polymère ayant un deuxième poids moléculaire, le deuxième polymère étant un deuxième polyacrylate ou une carboxyméthyle cellulose, ou un de leurs dérivés respectifs.

Le liant assure la tenue mécanique, la cohésion et la souplesse de l'électrode et améliore l'interaction entre l'électrode et l'électrolyte de l'accumulateur au lithium.

Le liant représente, préférentiellement, de 2% à 15% du poids de l'électrode, et de préférence, de 4% à 10% du poids de l'électrode.

Avec de telles gammes, les propriétés électrochimiques sont améliorées.

Selon un premier mode de réalisation, le premier polymère est un polyacrylate et le deuxième polymère est une carboxyméthyle cellulose.

Selon un deuxième mode de réalisation, le premier polymère et le deuxième polymère sont des polyacrylates ou un de leurs dérivés.

Préférentiellement, le premier polymère est un polyacrylate $PAA_1$ et le deuxième polymère est un polyacrylate $PAA_2$.

Le premier poids moléculaire est inférieur ou égal à 400,000g/mol et supérieur ou égal à 150,000g/mol.

Le deuxième poids moléculaire est supérieur ou égal à 650,000g/mol et inférieur ou égal à 4,000,000g/mol, et, de préférence, le second poids moléculaire est supérieur ou égal à 650,000g/mol et inférieur ou égal à 1,500,000g/mol.

Le degré de dissociation des polymères va de 35% à 100%.

Encore plus préférentiellement, le premier polymère est un polyacrylate $PAA_1$ et le deuxième polymère est un polyacrylate $PAA_2$, le premier poids moléculaire étant supérieur ou égal à 150,000g/mol, de préférence supérieur ou égal à 250,000g/mol et inférieur ou égal à 400,000g/mol, le deuxième poids moléculaire étant supérieur ou égal à 1,000,000g/mol et inférieur ou égal à 1,500,000g/mol, et le degré de dissociation des polymères étant supérieur à 90%.

Le premier poids moléculaire est d'au plus 67% massique par rapport au deuxième poids moléculaire.

Préférentiellement, le liant est constitué des deux polymères.

Selon un mode de réalisation, l'électrode pour accumulateur au lithium, ou batterie au lithium, est constituée :

- du matériau actif d'électrode, à base de silicium,
- de l'agent conducteur,
- du liant comprenant le mélange des deux polymères.

L'électrode est, avantageusement, dépourvue de latex.
Le pourcentage massique du second polyacrylate est, avantageusement, inférieur ou égal à 2% par rapport au poids total de l'électrode pour conférer une viscosité maximale à l'encre de 5Pa.s à $100s^{-1}$. Il est, de préférence, supérieur ou égal à 0,1% par rapport au poids total de l'électrode.
Il a également été constaté une absence de craquèlements et/ou de décollement de l'électrode pour les mélanges de PAA sélectionnés.
L'électrode présente une bonne homogénéité et une bonne flexibilité ainsi qu'une bonne adhérence au collecteur de courant. Les accumulateurs au lithium comportant au moins une telle électrode ont, par conséquent, des performances électrochimiques améliorées.
La tenue mécanique de l'électrode permet d'imprimer aisément l'électrode quelle que soit la forme du motif, même pour des grammages d'électrode élevés.
La non-polymérisation des PAA lors du séchage a été vérifiée. Une électrode a subi un traitement d'extraction du liant. Ce liant extrait a été caractérisé par la méthode chromatographique décrite précédemment permettant de retrouver la distribution bi-modal de la masse moléculaire.
Des essais en cyclage à 20°C ont également été réalisés sur les électrodes élaborées à partir des encres précédemment décrites, en pile bouton face à du lithium métal avec un électrolyte à base de carbonates contenant du carbonate d'éthylène fluoré. L'électrode est cyclée à un régime de C/10, soit une charge en 10h en tenant compte de la proportion et de la capacité spécifique du composite.
Les cyclages sont effectués avec un VMP3 de chez Biologic pour avoir une précision d'au moins 0,05% au niveau de l'efficacité coulombique, soit le rapport entre le courant de délithiation ou de réduction et le courant de lithiation ou d'oxydation pour un même cycle (le cycle commençant par une lithiation ou une réduction). L'irréversible de premier cycle est ainsi égale à un moins l'efficacité coulombique au premier cycle et la perte par cycle est égale à un moins l'efficacité coulombique pour un cycle donné.
Les résultats ont montré qu'au premier cycle, l'irréversible de premier cycle est importante, associée à la formation de l'interface électrode/électrolyte. Ensuite, la perte par cycle s'atténue pour se stabiliser complètement après 10 cycles pour plusieurs dizaines de cycles (Figure 5).
Les différentes électrodes testées sont ainsi comparées par rapport à l'irréversible de premier cycle et à la perte stabilisée après 10 cycles, typiquement entre 10 et 20 cycles.
Les résultats sont fournis dans les tableaux suivants :

| Electrode | CMC | CMC/PAA | A | B | C |
|---|---|---|---|---|---|
| Irréversibilité 1er cycle (%) | 12% | 12,1% | 14,8% | 13,2% | 14,7% |
| Perte par cycle (%) | 99,5% | 99,5% | 99,2% | 99,2% | 99,2% |

| Electrode | D | E | F | G | H | I |
|---|---|---|---|---|---|---|
| Irréversibilité 1er cycle (%) | 12,6% | 12,4% | 12,7% | 11,8% | 11,3% | 12,3% |
| Perte par cycle (%) | 99,5% | 99,5% | 99,3% | 99,6% | 99,7% | 99,5% |

Les plus mauvaises performances (électrochimiques et par rapport à la qualité de l'électrode) sont obtenues par les électrodes constituées d'un seul liant d'un unique poids moléculaire.
Une amélioration est obtenue lors de l'utilisation d'un liant comprenant deux polymères. Et les meilleurs résultats sont obtenus avec les formulations D à I qui sont les mélanges PAA de deux poids moléculaires distincts (avec un premier poids moléculaire d'au plus 67% par rapport au deuxième poids moléculaire) et un degré de dissociation de 100%.
Des résultats ont également été obtenus dans le format de référence 18650. L'électrode positive est à base de $LiCoO_2$, avec un grammage de 18,3 $mg/cm^2$, soit 2,5 $mAh/cm^2$, et une porosité de 25%. Les deux électrodes négatives

comparées correspondent aux formulations CMC/PAA et le mélange de deux PAA (électrode G), avec un grammage de 5,6 mg/$cm^2$ soit 3,0 mAh/$cm^2$ et une porosité de 35%. L'électrolyte est à base de carbonates contenant du carbonate d'éthylène fluoré. Les résultats suivant ont été obtenus pour des cyclages à 20°C, à C/2, entre 4,2 et 2,7V :

| Electrode | CMC/PAA | G |
|---|---|---|
| Irréversible 1er cycle (%) | 16,5% | 15% |
| Rétention de capacité après 10 cycles (%) | 94,7% | 96,5% |
| Rétention de capacité après 100 cycles (%) | 72,3% | 84,3% |
| Rétention de capacité après 200 cycles (%) | 62,3% | 74,7% |

La rétention de capacité après un nombre de cycle n est le rapport entre la capacité déchargée au cycle n et la capacité déchargée au cycle 2.

Il a été observé que le PAA montre des performances améliorées par rapport à une formulation classique à base de CMC.

Une réduction de 1,5% de l'irréversible de premier cycle a été observée entre l'élément 18650 à base de l'électrode G en comparaison de celui avec l'électrode CMC/PAA.

La rétention de capacité est également fortement améliorée avec l'élément 18650 à base de l'électrode G en comparaison de celui avec l'électrode CMC/PAA.

La durée de vie de l'accumulateur Li-ion avec la formulation optimisé à l'électrode négative est augmentée de plus de 50%, en se basant sur le nombre de cycles avant d'atteindre une rétention de capacité de 80% par rapport à la capacité au cycle 2.

## Revendications

**1.** Electrode pour accumulateur au lithium, ou batterie au lithium, comprenant :

- un matériau actif d'électrode, à base de silicium,
- un agent conducteur,
- un liant comprenant un mélange de deux polymères :

o le premier polymère ayant un premier poids moléculaire, le premier polymère étant un premier polyacrylate ou un de ses dérivés,
o le deuxième polymère ayant un deuxième poids moléculaire, le deuxième polymère étant un deuxième polyacrylate ou une carboxyméthyle cellulose, ou un de leurs dérivés respectifs.
**caractérisée en ce que** le premier poids moléculaire est inférieur ou égal à 400,000g/mol et supérieur ou égal à 150,000g/mol et
**en ce que** le deuxième poids moléculaire est supérieur ou égal à 650,000g/mol et inférieur ou égal à 4,000,000g/mol, et, de préférence, le second poids moléculaire est supérieur ou égal à 650,000g/mol et inférieur ou égal à 1,500,000g/mol.

**2.** Electrode selon la revendication 1, **caractérisée en ce que** le degré de dissociation des polymères va de 35% à 100%.

**3.** Electrode selon l'une des revendications 1 et 2, **caractérisée en ce que** le premier polymère est un polyacrylate et **en ce que** le deuxième polymère est une carboxyméthyle cellulose

**4.** Electrode selon l'une des revendications 1 et 2, **caractérisée en ce que** le premier polymère et le deuxième polymère sont des polyacrylates ou un de leurs dérivés.

**5.** Electrode selon la revendication 4, **caractérisée en ce que** le premier polymère et le deuxième polymère sont des polyacrylates.

**6.** Electrode selon la revendication 5, **caractérisée en ce que** :

- le premier poids moléculaire est supérieur ou égal à 150,000g/mol, de préférence supérieur ou égal à 250,000g/mol et inférieur ou égal à 400,000g/mol,
- le deuxième poids moléculaire est supérieur ou égal à 1,000,000g/mol et inférieur ou égal à 1,500,000g/mol,
- le degré de dissociation des polymères est supérieur à 90%.

**7.** Electrode selon l'une quelconque des revendications 1 à 6, **caractérisée en ce que** le premier poids moléculaire est d'au plus 67% massique par rapport au deuxième poids moléculaire.

**8.** Electrode selon l'une des revendications 1 à 7, **caractérisée en ce que** le liant est constitué des deux polymères.

**9.** Electrode selon l'une quelconque des revendications précédentes, **caractérisée en ce que** le liant représente de 2% à 15% du poids de l'électrode, et de préférence, de 4% à 10% du poids de l'électrode.

**10.** Electrode selon l'une quelconque des revendications précédentes, **caractérisée en ce que** le silicium est sous la forme de nanoparticules, et le silicium étant susceptible de former un alliage avec le lithium de type $Li_xSi$, avec x compris entre 0 et 3,75.

**11.** Electrode selon l'une quelconque des revendications précédentes, **caractérisée en ce que** le silicium est inséré dans une matrice micrométrique ayant une taille allant de 0,1$\mu$m à 50$\mu$m, la matrice micrométrique étant une matrice de carbone ou une matrice métallique et **en ce que** le silicium est susceptible de former un alliage avec le lithium de type $Li_xSi$, avec x compris entre 0 et 3,75.

**12.** Electrode selon la revendication 10 ou 11, **caractérisé en ce que** 90% du silicium sous forme de nanoparticules présente une distribution de taille inférieure à 300nm, et, de préférence, 50% du silicium sous forme de nanoparticules présente une distribution de taille inférieure à 150nm.

**13.** Electrode selon l'une quelconque des revendications précédentes, **caractérisée en ce qu'**elle a un grammage allant de 2,5mg/$cm^2$ à 10mg/$cm^2$ de matière active déposée et une densité d'au moins 1,4.

**14.** Electrode selon l'une quelconque des revendications 1 à 13, **caractérisée en ce qu'**elle est dépourvue de latex.

**15.** Electrode selon l'une quelconque des revendications 1 à 13, **caractérisée en ce que** l'électrode comporte, en outre, un additif, choisi parmi la carboxyméthyle cellulose, du latex, un agent réticulant ou un polyacrylate d'un autre poids moléculaire, l'additif représentant 5% massique ou moins de l'électrode, et de préférence, 3% ou moins.

**16.** Electrode selon l'une quelconque des revendications 1 à 14, **caractérisée en ce qu'**elle est constituée :

- du matériau actif d'électrode, à base de silicium,
- de l'agent conducteur,
- du liant constitué par le mélange des deux polymères :

  ◦ le premier polymère ayant un premier poids moléculaire, le premier polymère étant un premier polyacrylate ou un de ses dérivés,
  ◦ le deuxième polymère ayant un deuxième poids moléculaire, le deuxième polymère étant un deuxième polyacrylate ou une carboxyméthyle cellulose, ou un de leurs dérivés respectifs.

**17.** Encre pour la réalisation d'une électrode de batterie lithium-ion selon l'une quelconque des revendications 1 à 16, comprenant :

- un matériau actif d'électrode, à base de silicium,
- un solvant,
- un agent conducteur,
- un liant comprenant un mélange de deux polymères,

  o le premier polymère ayant un premier poids moléculaire, le premier polymère étant un premier polyacrylate ou un de ses dérivés,
  o le deuxième polymère ayant un deuxième poids moléculaire, le deuxième polymère étant un deuxième polyacrylate ou une carboxyméthyle cellulose, ou un de leurs dérivés respectifs.

**caractérisée en ce que** le premier poids moléculaire est inférieur ou égal à 400,000g/mol et supérieur ou égal à 150,000g/mol et
**en ce que** le deuxième poids moléculaire est supérieur ou égal à 650,000g/mol et inférieur ou égal à 4,000,000g/mol, et, de préférence, le second poids moléculaire est supérieur ou égal à 650,000g/mol et inférieur ou égal à 1,500,000g/mol.

**18.** Encre selon la revendication 17, **caractérisée en ce que** le degré de dissociation des polymères va de 35% à 100%.

**19.** Encre selon l'une des revendications 17 et 18, **caractérisée en ce que** le premier polymère et le deuxième polymère sont des polyacrylates.

**20.** Encre selon l'une des revendications 17 et 18, **caractérisée en ce que** le premier polymère est un polyacrylate et **en ce que** le deuxième polymère est une carboxyméthyle cellulose.

**21.** Encre selon l'une quelconque des revendications 17 à 20, **caractérisée en ce que** le liant représente de 2% à 15% du poids de l'extrait sec, et de préférence, de 4% à 10% du poids de l'extrait sec.

**22.** Encre selon l'une quelconque des revendications 17 à 21, **caractérisée en ce que** le silicium est sous la forme de nanoparticules, le silicium étant compris dans une matrice micrométrique ayant une taille allant de 0,1$\mu$m à 50$\mu$m, la matrice micrométrique étant une matrice de carbone ou une matrice métallique, et le silicium étant susceptible de former un alliage avec le lithium de type LixSi, avec x compris entre 0 et 3,75.

**23.** Encre selon la revendication précédente, **caractérisé en ce que** 90% du silicium sous forme de nanoparticules présente une distribution de taille inférieure à 300nm, et, de préférence, 50% du silicium sous forme de nanoparticules présente une distribution de taille inférieure à 150nm.

## Patentansprüche

**1.** Elektrode für einen Lithiumakkumulator, oder Lithiumbatterie, umfassend:

- ein aktives Elektrodenmaterial auf Basis von Silizium,
- ein leitendes Agens,
- einen Binder, der eine Mischung von zwei Polymeren umfasst:

  o wobei das erste Polymer ein erstes Molekulargewicht hat, wobei das erste Polymer ein erstes Polyacrylat oder eines seiner Derivate ist,
  o wobei das zweite Polymer ein zweites Molekulargewicht hat, wobei das zweite Polymer ein zweites Polyacrylat oder eine Carboxymethylzellulose oder eines ihrer jeweiligen Derivate ist,

**dadurch gekennzeichnet, dass** das erste Molekulargewicht kleiner oder gleich 400,000 g/mol und größer oder gleich 150,000 g/mol ist, und
dass das zweite Molekulargewicht größer oder gleich 650,000 g/mol und kleiner oder gleich 4,000,000 g/mol ist, und wobei das zweite Molekulargewicht vorzugsweise größer oder gleich 650,000 g/mol und kleiner oder gleich 1,500,000 g/mol ist.

**2.** Elektrode nach Anspruch 1, **dadurch gekennzeichnet, dass** der Dissoziationsgrad der Polymere von 35% bis 100% geht.

**3.** Elektrode nach einem der Ansprüche 1 und 2, **dadurch gekennzeichnet, dass** das erste Polymer ein Polyacrylat ist, und dass das zweite Polymer eine Carboxymethylzellulose ist.

**4.** Elektrode nach einem der Ansprüche 1 und 2, **dadurch gekennzeichnet, dass** das erste Polymer und das zweite Polymer Polyacylate oder eines ihrer Derivate sind.

**5.** Elektrode nach Anspruch 4, **dadurch gekennzeichnet, dass** das erste Polymer und das zweite Polymer Polyacrylate sind.

**6.** Elektrode nach Anspruch 5, **dadurch gekennzeichnet, dass**:

- das erste Molekulargewicht größer oder gleich 150,000 g/mol, vorzugsweise größer oder gleich 250,000 g/mol und kleiner oder gleich 400,000g/mol ist,
- das zweite Molekulargewicht größer oder gleich 1,000,000 g/mol und kleiner oder gleich 1,500,000 g/mol ist,
- der Dissoziationsgrad der Polymere größer als 90% ist.

**7.** Elektrode nach einem der Ansprüche 1 bis 6, **dadurch gekennzeichnet, dass** das erste Molekulargewicht höchstens 67 Massen-% bezogen auf das zweite Molekulargewicht ist.

**8.** Elektrode nach einem der Ansprüche 1 bis 7, **dadurch gekennzeichnet, dass** der Binder aus den zwei Polymeren gebildet ist.

**9.** Elektrode nach einem der vorhergehenden Ansprüche, **dadurch gekennzeichnet, dass** der Binder von 2% bis 15% des Gewichts der Elektrode repräsentiert, und vorzugsweise von 4% bis 10% des Gewichts der Elektrode.

**10.** Elektrode nach einem der vorhergehenden Ansprüche, **dadurch gekennzeichnet, dass** das Silizium in der Form von Nanopartikeln ist, und das Silizium dazu ausgelegt ist, eine Legierung mit dem Lithium von Typ $Li_xSi$ zu bilden, wobei x zwischen 0 und 3,75 enthalten ist.

**11.** Elektrode nach einem der vorhergehenden Ansprüche, **dadurch gekennzeichnet, dass** das Silizium in eine mikrometrische Matrix mit einer Größe eingesetzt ist, die von 0,1 μm bis 50 μm geht, wobei die mikrometrische Matrix eine Kohlenstoffmatrix oder eine metallische Matrix ist, und dass das Silizium dazu ausgelegt ist, eine Legierung mit dem Lithium vom Typ $Li_xSi$ zu bilden, wobei x zwischen 0 und 3,75 enthalten ist.

**12.** Elektrode nach Anspruch 10 oder 11, **dadurch gekennzeichnet, dass** 90% des Siliziums in Form von Nanopartikeln eine Größenverteilung kleiner als 300 nm aufweist, und vorzugsweise 50% des Siliziums in Form von Nanopartikeln eine Größenverteilung kleiner als 150 nm aufweist.

**13.** Elektrode nach einem der vorhergehenden Ansprüche, **dadurch gekennzeichnet, dass** sie ein Flächengewicht hat, das von 2,5 $mg/cm^2$ bis 10 $mg/cm^2$ von aufgebrachtem aktiven Material und eine Dichte von wenigstens 1,4 hat.

**14.** Elektrode nach einem der Ansprüche 1 bis 13, **dadurch gekennzeichnet, dass** sie frei von Latex ist.

**15.** Elektrode nach einem der Ansprüche 1 bis 13, **dadurch gekennzeichnet, dass** die Elektrode ferner ein Additiv umfasst, ausgewählt aus Carboxymethylzellulose, Latex, einem Vernetzungsagens oder einem Polyacrylat mit einem anderen Molekulargewicht, wobei das Additiv 5 Massen-% oder weniger der Elektrode repräsentiert und vorzugsweise 3% oder weniger.

**16.** Elektrode nach einem der Ansprüche 1 bis 14, **dadurch gekennzeichnet, dass** sie gebildet ist:

- aus dem aktiven Elektrodenmaterial auf Basis von Silizium,
- aus dem leitenden Agens,
- aus dem Binder, der durch die Mischung der zwei Polymere gebildet ist:

  o wobei das erste Polymer ein erstes Molekulargewicht hat, wobei das erste Polymer ein erstes Polyacrylat oder eines seiner Derivate ist,
  o wobei das zweite Polymer ein zweites Molekulargewicht hat, wobei das zweite Polymer ein zweites Polyacrylat oder eine Carboxymethylzellulose oder eines ihrer jeweiligen Derivate ist,

**17.** Tinte zur Herstellung einer Elektrode einer Lithium-Ionen-Batterie nach einem der Ansprüche 1 bis 16, umfassend:

- ein aktives Elektrodenmaterial auf Basis von Silizium,
- ein Lösungsmittel
- ein leitendes Agens,
- einen Binder, der eine Mischung von zwei Polymeren umfasst:

  o wobei das erste Polymer ein erstes Molekulargewicht hat, wobei das erste Polymer ein erstes Polyacrylat

oder eines seiner Derivate ist,
o wobei das zweite Polymer ein zweites Molekulargewicht hat, wobei das zweite Polymer ein zweites Polyacrylat oder eine Carboxymethylzellulose oder eines ihrer jeweiligen Derivate ist,

**dadurch gekennzeichnet, dass** das erste Molekulargewicht kleiner oder gleich 400,000 g/mol und größer oder gleich 150,000 g/mol ist, und
dass das zweite Molekulargewicht größer oder gleich 650,000 g/mol und kleiner oder gleich 4,000,000 g/mol ist, und wobei das zweite Molekulargewicht vorzugsweise größer oder gleich 650,000 g/mol und kleiner oder gleich 1,500,000 g/mol ist.

**18.** Tinte nach Anspruch 17, **dadurch gekennzeichnet, dass** der Dissoziationsgrad der Polymere von 35% bis 100% geht.

**19.** Tinte nach einem der Ansprüche 17 und 18, **dadurch gekennzeichnet, dass** das erste Polymer und das zweite Polymer Polyacrylate sind.

**20.** Tinte nach einem der Ansprüche 17 und 18, **dadurch gekennzeichnet, dass** das erste Polymer ein Polyacrylat ist, und dass das zweite Polymer eine Carboxymethylzellulose ist.

**21.** Tinte nach einem der Ansprüche 17 bis 20, **dadurch gekennzeichnet, dass** der Binder von 2% bis 15% des Gewichts des Trockenextrakts repräsentiert, und vorzugsweise von 4% bis 10% des Gewichts des Trockenextrakts.

**22.** Tinte nach einem der Ansprüche 17 bis 21, **dadurch gekennzeichnet, dass** das Silizium in der Form von Nanopartikeln ist, wobei das Silizium in einer mikrometrischen Matrix enthalten ist, die eine Größe hat, die von 0,1 μm bis 50 μm geht, wobei die mikrometrische Matrix eine Kohlenstoffmatrix oder eine metallische Matrix ist, und wobei das Silizium dazu ausgelegt ist, eine Legierung mit dem Lithium von Typ $Li_xSi$ zu bilden, wobei x zwischen 0 und 3,75 enthalten ist.

**23.** Tinte nach dem vorhergehenden Anspruch, **dadurch gekennzeichnet, dass** 90% des Siliziums in Form von Nanopartikeln eine Größenverteilung kleiner als 300 nm aufweist, und vorzugsweise 50% des Siliziums in Form von Nanopartikeln eine Größenverteilung kleiner als 150 nm aufweist.

## Claims

**1.** Electrode for a lithium storage battery, or a lithium battery, comprising:

- an electrode active material, made from silicon,
- a conductive agent,
- a binder comprising a mixture of two polymers:

o the first polymer having a first molecular weight, the first polymer being a first polyacrylate or one of its derivatives,
o the second polymer having a second molecular weight, the second polymer being a second polyacrylate or a carboxymethyl cellulose, or one of their respective derivatives.

**characterized in that** the first molecular weight is less than or equal to 400,000g/mol and greater than or equal to 150,000g/mol and
**in that** the second molecular weight is greater than or equal to 650,000g/mol and less than or equal to 4,000,000g/mol, and preferably the second molecular weight is greater than or equal to 650,000g/mol and less than or equal to 1,500,000g/mol.

**2.** Electrode according to claim 1, **characterized in that** the degree of dissociation of the polymers ranges from 35% to 100%.

**3.** Electrode according to one of claims 1 and 2, **characterized in that** the first polymer is a polyacrylate and **in that** the second polymer is a carboxymethyl cellulose

4. Electrode according to one of claims 1 and 2, **characterized in that** the first polymer and the second polymer are polyacrylates or one of their derivatives.

5. Electrode according to claim 4, **characterized in that** the first polymer and the second polymer are polyacrylates.

6. Electrode according to claim 5, **characterized in that**:

- the first molecular weight is greater than or equal to 150,000g/mol, preferably greater than or equal to 250,000g/mol and less than or equal to 400,000g/mol,
- the second molecular weight is greater than or equal to 1,000,000g/mol and less than or equal to 1,500,000g/mol,
- the degree of dissociation of the polymers is greater than 90%.

7. Electrode according to any one of claims 1 to 6, **characterized in that** the first molecular weight is at most 67% by weight compared with the second molecular weight.

8. Electrode according to one of claims 1 to 7, **characterized in that** the binder is constituted by the two polymers.

9. Electrode according to any one of the foregoing claims, **characterized in that** the binder represents from 2% to 15% of the weight of the electrode, and preferably from 4% to 10% of the weight of the electrode.

10. Electrode according to any one of the foregoing claims, **characterized in that** the silicon is in the form of nanoparticles, and the silicon is able to form an alloy with the lithium of $Li_xSi$ type, with x comprised between 0 and 3.75.

11. Electrode according to any one of the foregoing claims, **characterized in that** the silicon is inserted in a micrometric matrix having a size ranging from 0.1 μm to 50μm, the micrometric matrix being a matrix of carbon or a metallic matrix, and **in that** the silicon is able to form an alloy with the lithium of $Li_xSi$ type, with x comprised between 0 and 3.75.

12. Electrode according to claim 10 or 11, **characterized in that** 90% of the silicon in the form of nanoparticles presents a size distribution of less than 300nm, and preferably 50% of the silicon in the form of nanoparticles presents a size distribution of less than 150nm.

13. Electrode according to any one of the foregoing claims, **characterized in that** it has a grammage ranging from 2.5mg/cm$^2$ to 10mg/cm$^2$ of deposited active material and a density of at least 1.4.

14. Electrode according to any one of claims 1 to 13, **characterized in that** it does not contain any latex.

15. Electrode according to any one of claims 1 to 13, **characterized in that** the electrode further comprises an additive, such as carboxymethyl cellulose, latex, a cross-linking agent or a polyacrylate of another molecular weight, the additive representing 5% by weight or less of the electrode, and preferably 3% or less.

16. Electrode according to any one of claims 1 to 14, **characterized in that** it is constituted:

- by the electrode active material, made from silicon,
- by the conductive agent,
- by the binder comprising the mixture of the two polymers:

  ◦ the first polymer having a first molecular weight, the first polymer being a first polyacrylate or one of its derivatives,
  ◦ the second polymer having a second molecular weight, the second polymer being a second polyacrylate or a carboxymethyl cellulose, or one of their respective derivatives.

17. Ink for producing an electrode for a lithium-ion battery according to any one of claims 1 to 16, comprising:

- an electrode active material, made from silicon,
- a solvent,
- a conductive agent,
- a binder comprising a mixture of two polymers,

o the first polymer having a first molecular weight, the first polymer being a first polyacrylate or one of its derivatives,
o the second polymer having a second molecular weight, the second polymer being a second polyacrylate or a carboxymethyl cellulose, or one of their respective derivatives.

**characterized in that** the first molecular weight is less than or equal to 400,000g/mol and greater than or equal to 150,000g/mol and
**in that** the second molecular weight is greater than or equal to 650,000g/mol and less than or equal to 4,000,000g/mol, and preferably the second molecular weight is greater than or equal to 650,000g/mol and less than or equal to 1,500,000g/mol.

**18.** Ink according to claim 17, **characterized in that** the degree of dissociation of the polymers ranges from 35% to 100%.

**19.** Ink according to one of claims 17 and 18, **characterized in that** the first polymer and the second polymer are polyacrylates.

**20.** Ink according to one of claims 17 and 18, **characterized in that** the first polymer is a polyacrylate and **in that** the second polymer is a carboxymethyl cellulose.

**21.** Ink according to any one of claims 17 to 20, **characterized in that** the binder represents from 2% to 15% of the weight of the dry extract, and preferably from 4% to 10% of the weight of the dry extract.

**22.** Ink according to any one of claims 17 to 21, **characterized in that** the silicon is in the form of nanoparticles, the silicon being comprised in a micrometric matrix having a size ranging from 0.1μm to 50μm, the micrometric matrix being a matrix of carbon or a metallic matrix,, and the silicon being able to form an alloy with the lithium of LixSi type, with x comprised between 0 and 3.75.

**23.** Ink according to the previous claim, **characterized in that** 90% of the silicon in the form of nanoparticles presents a size distribution of less than 300nm, and preferably 50% of the silicon in the form of nanoparticles presents a size distribution of less than 150nm.

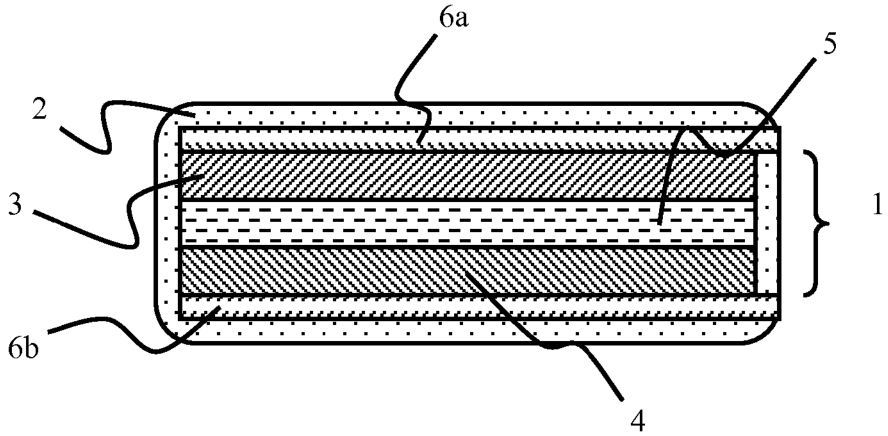
6a
5
2
3
1
6b
4

Fig. 1

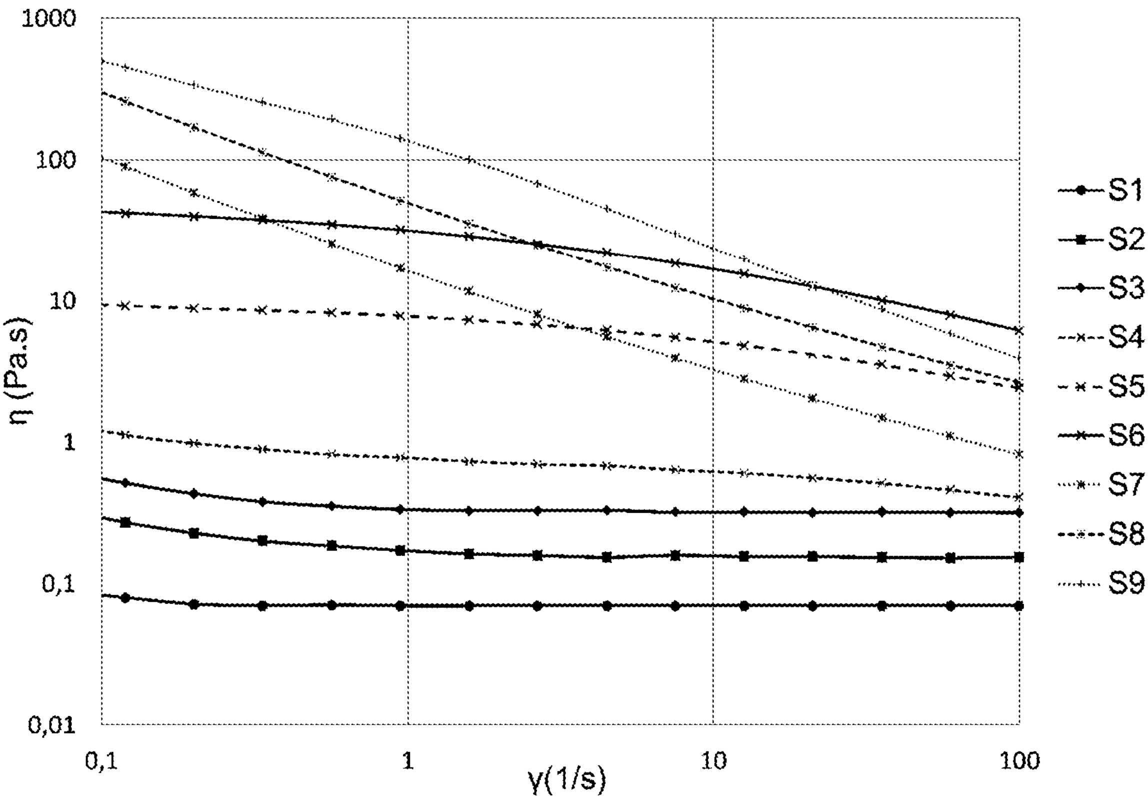
1000
100
10
1
0,1
0,01
η (Pa.s)
0,1
1
10
100
γ(1/s)
S1
S2
S3
S4
S5
S6
S7
S8
S9

Fig. 2

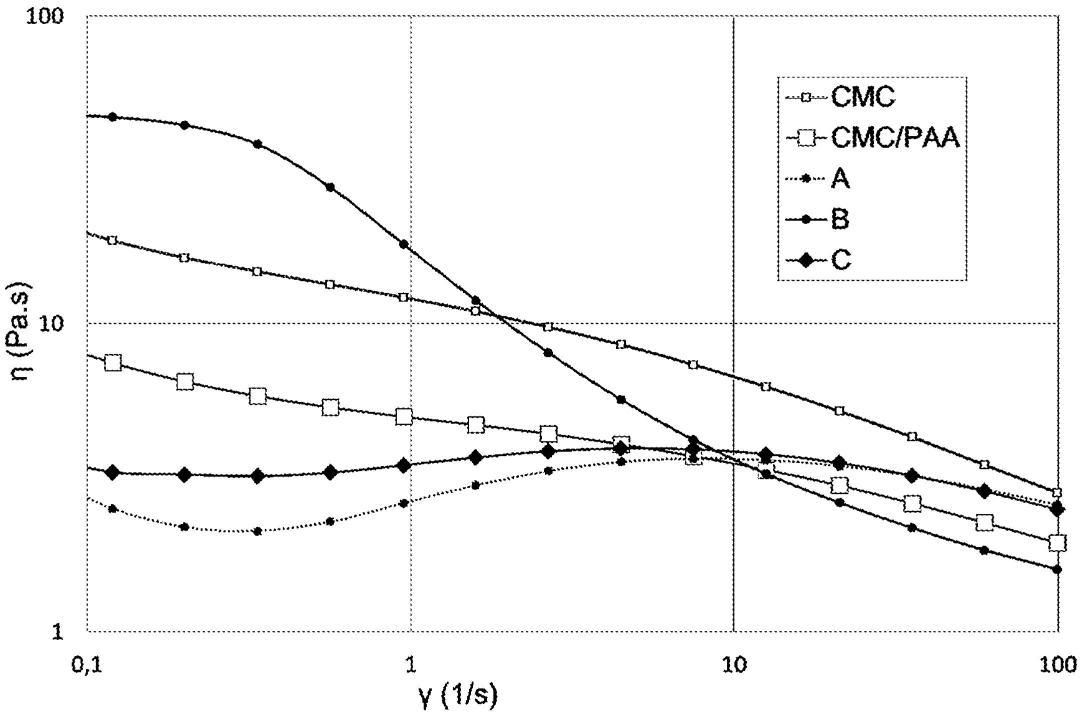
100
10
1
η (Pa.s)
0,1
1
10
100
γ (1/s)
CMC
CMC/PAA
A
B
C

Fig. 3a

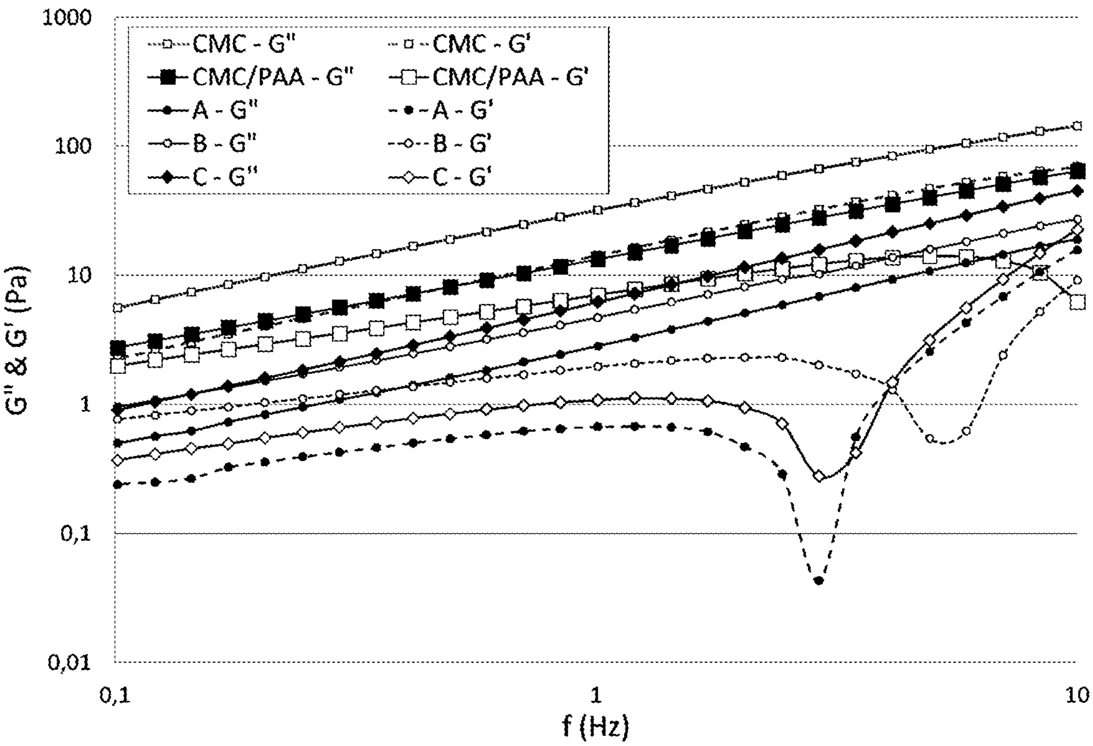
1000
100
10
1
0,1
0,01
G" & G' (Pa)
0,1
1
10
f (Hz)
CMC - G"
CMC - G'
CMC/PAA - G"
CMC/PAA - G'
A - G"
A - G'
B - G"
B - G'
C - G"
C - G'

Fig. 3b

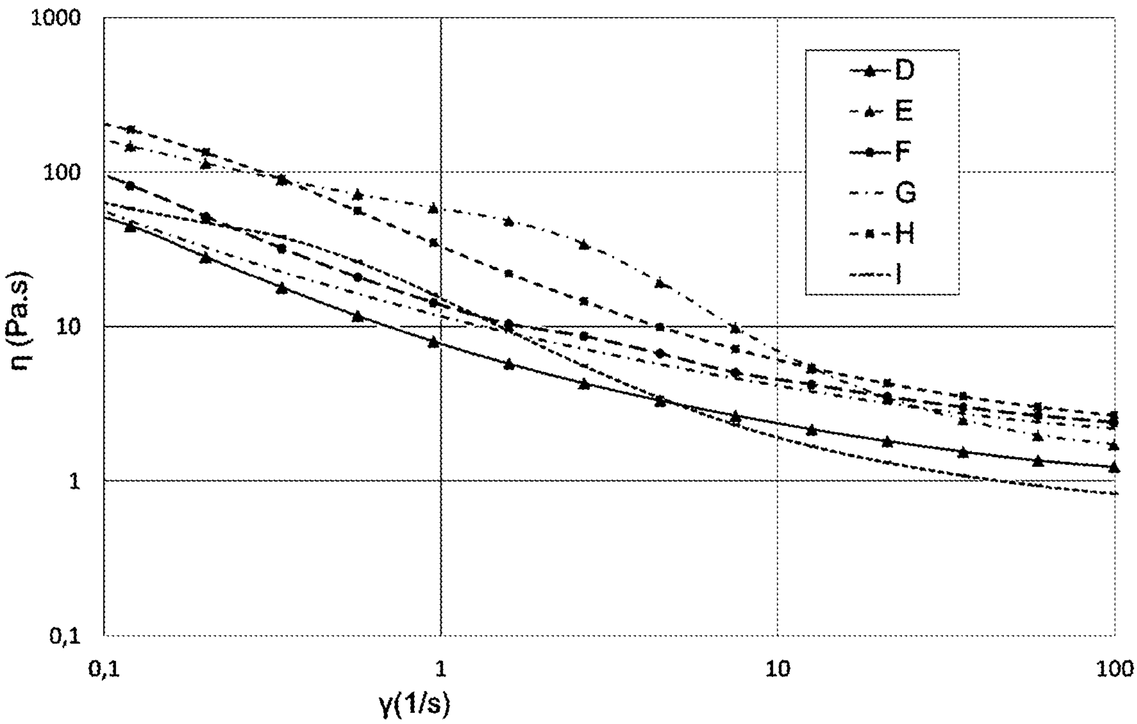
1000
100
10
1
0,1
η (Pa.s)
0,1
1
10
100
γ(1/s)
D
E
F
G
H
I

Fig. 4a

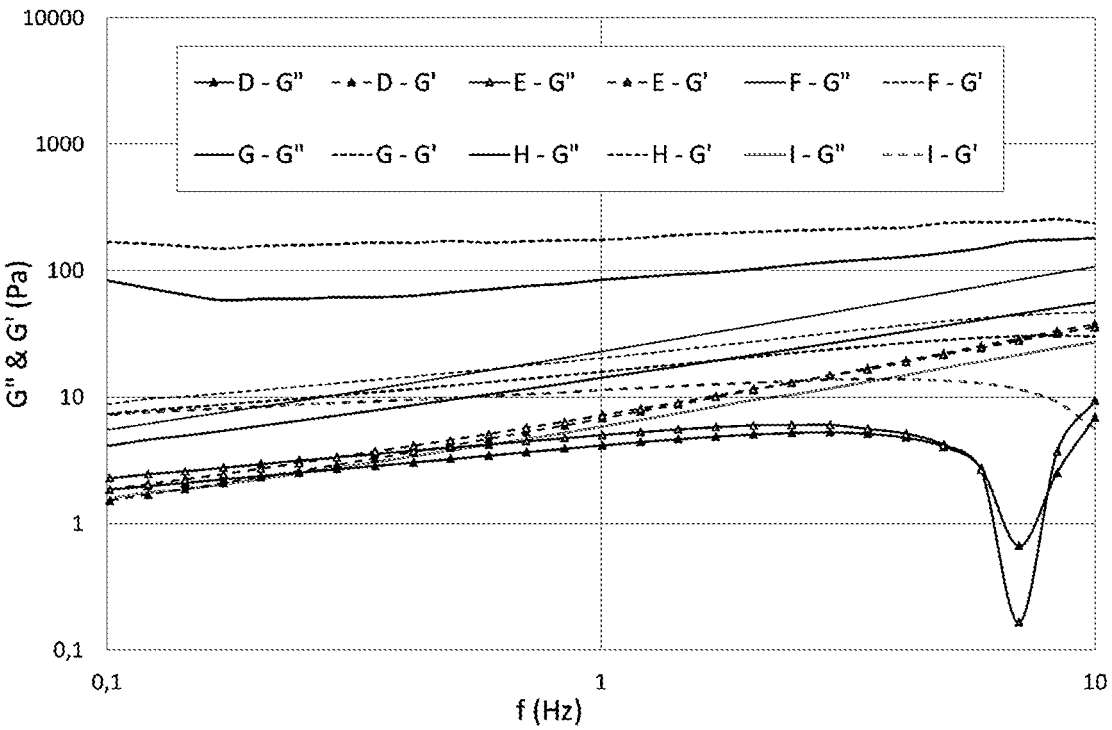
10000
1000
100
10
1
0,1
G" & G' (Pa)
0,1
1
10
f (Hz)
D - G"
D - G'
E - G"
E - G'
F - G"
F - G'
G - G"
G - G'
H - G"
H - G'
I - G"
I - G'

Fig. 4b

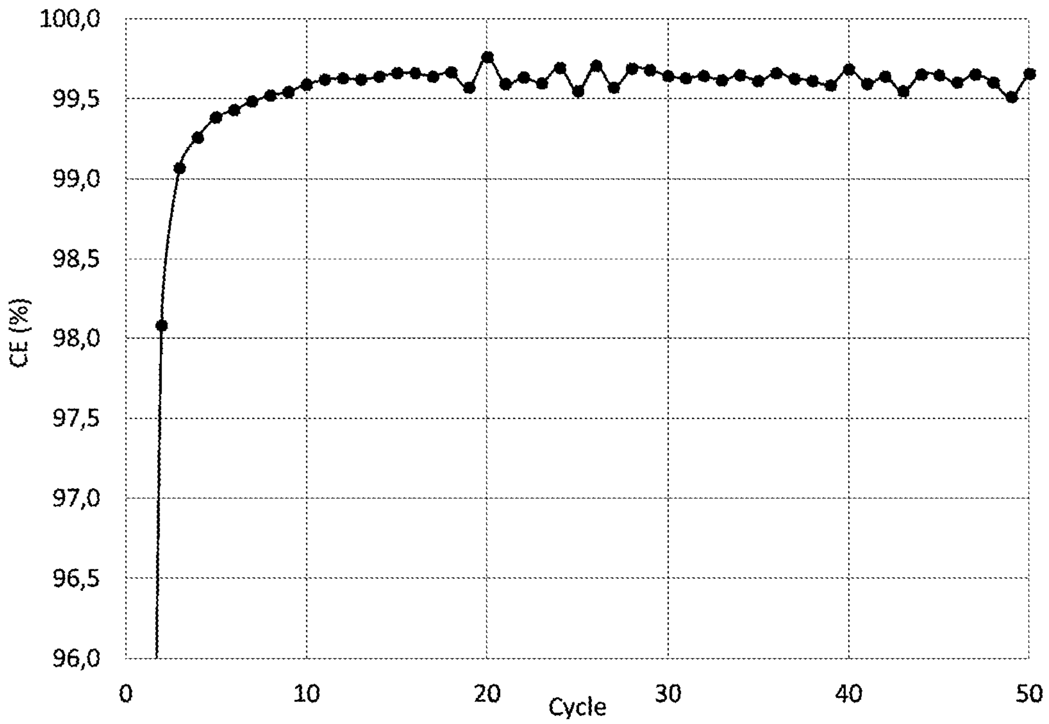


Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20070026313 A
- US 20130236778 A
- US 20150287989 A
- GB 2502345 A


### Littérature non-brevet citée dans la description


- Compréhension des mécanismes de (dé)lithiation et de dégradation d'électrodes de silicium pour accumulateur Li-ion et étude de facteurs influents. **ETIENNE RADVANYI.** thèse. Université de Grenoble, 2014
- *J. Phys. Chem. C,* 2011, vol. 115, 13487-13495
- *Energy Environ. Sci.,* 2012, vol. 5, 9014-9020
- *Appl. Mater. Interfaces,* 2010, vol. 2 (11), 3004-3010